Europäisches Patentamt

European Patent Office

Office européen des brevets

(11) Publication number: **0 117 096**
**A1**

## (12) EUROPEAN PATENT APPLICATION

(21) Application number: **84300738.6**

(22) Date of filing: **06.02.84**

(51) Int. Cl.³: **C 02 F 1/52**

(30) Priority: **22.02.83 US 468718**

(43) Date of publication of application:
**29.08.84 Bulletin 84/35**

(84) Designated Contracting States:
**AT BE CH DE FR GB IT LI LU NL SE**

(71) Applicant: Schubring, Robert W.
2723 Avonhurst Drive
Troy Michigan 48084(US)

(72) Inventor: Schubring, Robert W.
2723 Avonhurst Drive
Troy Michigan 48084(US)

(74) Representative: Myerscough, Philip Boyd et al,
J.A.Kemp & Co. 14, South Square Gray's Inn
London, WC1R 5EU(GB)

(54) Alkaline waste water treatment.

(57) Akaline waste waters are treated to precipitate harmful organic residues and other contaminants therefrom by a process which involves carbonating the alkaline waste to a pH of 11 or below, adding calcium chloride to convert the carbonates formed in the liquid to insoluble calcium carbonate and cause precipitation thereof, and separating the calcium carbonate precipitate which brings down with it most of the harmful organic materials. The resultant filtrate can be treated by a conventional activated sludge process as found in many municipal sewage systems, and will not harm the microbial system thereof. A separation apparatus of generally inverted pyramidal shape for conducting the process is characterised by downwardly converging side walls (54,56) having upper portion (56) of gradient less than 60° and lower portion (54) of gradient at least 60° to the horizontal.

FIG. 2.

- 1 -

DESCRIPTION

TITLE: "ALKALINE WASTE WATER TREATMENT"

This invention relates to the treatment of alkaline waste water and more particularly to a process and apparatus for treating alkaline waste water to render it acceptable for disposal or further biological treatment.

The introduction of legislation imposing strict controls on industrial effluents which may enter natural water courses has necessitated more treatment of discharge and effluent from industrial enterprises. For most medium and large scale industrial plants, appropriate waste treatment systems can be installed and operated on a routine basis, since the chemical composition of the effluent does not vary widely. Nevertheless, such installations add to the cost of end products and services, and so they should be capable of operation as economically as possible. In small scale operations, and operations which are carried out intermittently or infrequently, however, such as the washing and cleaning of large chemical containers, tank cars, machinery etc., the effluent can be highly variable in chemical composition, generally alkaline, and the scale and nature of the operation cannot economically justify a large expensive, permanent installation. Alkaline waste waters from such cleaning operations present particular problems of disposal.

It is a common practice to subject waste water obtained from municipal sewers to an "activated sludge" treatment whereby the degradable components of the waste water are acted upon by microbes to digest them, and the products are chemically precipitated and collected as a sludge to be subsequently buried or burned. However, many industrial effluents contain materials such as hydrocarbon oils, surfactants, latices and aqueous polymer emulsions, which, besides being destructive to the aquatic environment, are also harmful to an activated-sludge wastewater treatment plant. In one way or another they deactivate the micro-organisms. Such effluents cannot, therefore, simply be discharged into municipal sewer systems. When the aqueous effluent is alkaline or contains surfactants, e.g. resulting from a cleaning operation, phase separation between lipophilic and hydrophilic substances does not occur cleanly enough to permit skimming.

It is known to treat alkaline waste water with sulphuric acid, thereby lowering its pH, and then to add various treatment agents such as activated carbon, potassium permanganate, manganese sulphate and calcium carbonate, so as to render the waste water acceptable to sludge treatment. Acid residues and excess oxidizing agents resulting from such treatment, however, preclude the subsequent use of sulphides to precipitate and remove from solution heavy metal residues, because of the risk of hydrogen sulphide generation and re-solubilization of the metals e.g. as sulphates.

## SUMMARY OF THE INVENTION

It is an object of the present invention to provide a novel process for treating alkaline waste water.

- 3 -

It is a further object of the present invention to provide a process for rendering alkaline wastes containing dissolved and suspended organics more acceptable for biological treatment and disposal.

It is a further object to provide a method whereby heavy metals and phosphates may be removed from organic-laden waste waters.

It is still another object of the present invention to provide a novel device that is useful in the treatment of alkaline waste water.

Generally, the present invention proposes the addition of a carbonating agent to alkaline waste water thereby substantially converting to carbonates the hydroxides therein and lowering the pH. This is followed by the addition of calcium chloride which, when added to the carbonates under alkaline conditions will cause the formation of insoluble calcium carbonate. The calcium carbonate thus formed has been found to precipitate and settle from the solution in such a manner that it carries with it a substantial amount of the dissolved or suspended organic matter out of solution.

The solids so formed can be buried, burned or otherwise disposed of without entering natural water courses. The liquid is substantially free from matter which is harmful to subsequent biological treating agents.

Thus, according to the present invention there is provided a process for treating alkaline waste water containing dissolved and suspended organic material which comprises:

- 4 -

carbonating said waste water, to adjust the pH thereof to 11 or less; subsequently adding to the carbonated waste water a sufficient quantity of calcium chloride to convert the carbonates therein to calcium carbonate; and separating the resulting insoluble calcium carbonate with organic matter associated therewith from the remaining liquid phase.

According to a further aspect of the present invention, there is provided a device for separating liquids from precipitated solids comprising a vessel of generally inverted pyramidal shape, the downwardly converging side walls of which have upper portions of shallow gradient less than 60° to the horizontal, preferably 30°-60° and lower portions of greater than 60° to the horizontal gradient, a separating device adjacent to the upper end of the vessel, and a lower valved outlet for removal of separated materials from the mixture.

## BRIEF REFERENCE TO DRAWINGS

FIGURE 1 is a diagrammatic illustration of a process according to the present invention;

FIGURE 2 is a side elevation partly in section, of a separation apparatus according to the present invention;

FIGURE 3 is a plan view of the apparatus of Fig. 2.

## DESCRIPTION OF THE PREFERRED EMBODIMENTS

The waste water may be carbonated by treatment with one or more carbonating agents selected from sodium bicarbonate, potassium bicarbonate, ammonium bicarbonate, carbon dioxide (gaseous, liquid or solid), or carbon dioxide-rich gas mixtures such as flue gases and exhaust gas from internal combustion engines. Preferably, the alkaline waste water is carbonated by treatment with carbon dioxide, which is suitably bubbled as a gas through the waste water solution. The addition of carbon dioxide to the waste water causes the conversion of hydroxides present in the solution into their corresponding carbonates and, accordingly, lowers the pH of the waste water.

The waste water should be treated with a sufficient amount of carbon dioxide or other carbonating agent so as to bring the pH value of the waste water to pH 11 or below. Thus, the quantity of carbonating agent required will depend on the concentration of alkali in the waste water, as determined by prior testing. Preferably, the pH of the waste water after carbonation is about pH 9.0 - pH 11.0. A 50% molar excess of carbon dioxide, based on hydroxide present, is generally sufficient to lower the pH to the desired range. The carbon dioxide gas should be added in a manner which allows for ready monitoring and adjustment of the amount added, i.e. the flow rate of the added gas, and in a manner which permits high absorption of the gas in the liquid. Suitably, the carbon dioxide can be introduced through a gas diffuser from which the gas issues through very small holes into the liquid. In this manner, an absorption efficiency of about 95% may be attained. The rate at which the pH of the solution changes during the carbonating step of the present invention should be carefully

- 6 -

monitored so as to prevent the formation of bicarbonates.

The carbonated waste water thus obtained is treated preferably with an aqueous solution or a finely ground powder of calcium chloride. Due to the nature of $CaCl_2$, direct addition of solid $CaCl_2$ to the waste water is less desirable, since it may result in caked over, incompletely dissolved solid $CaCl_2$. The quantity of $CaCl_2$ or concentration of $CaCl_2$ solution to be added to the carbonated waste water will depend on the concentration of carbonates therein, and thus on the original amount of alkali, in the wastes. It is preferred to use an aqueous $CaCl_2$ solution in the concentration range of 25-35% and most preferably 30%, since a 30% aqueous $CaCl_2$ solution has the lowest freezing point while remaining cost effective, and is then useful over the widest range of temperatures. Some of the alkali initially present in the waste water may be in the form of calcium hydroxide. In such case, the quantity or concentration of $CaCl_2$ to be added may be correspondingly decreased since carbonation of calcium hydroxide contained in the waste water will bring about direct formation of a calcium carbonate precipitate.

In general, sufficient calcium chloride should be added to the waste water to reduce its pH to within the range 6.9 - 7.5. This ensures that substantially all of the soluble carbonates have been converted to insoluble calcium carbonate. Preferably, the calcium chloride addition is stopped when the solution has reached a pH of 7.

Along with the calcium carbonate precipitate, several

- 7 -

other substances, commonly present as contaminants in the waste water, may precipitate during the process of this invention. Carboxylic acids under basic conditions will form insoluble calcium salts which, along with other crystallizing materials, may engulf and carry down large organic molecules, for example, kerosene, heavy alcohols, acrylics, resins and other polymerics. Emulsified oils, if present in the waste water, may follow the emulsifier into the granules of precipitate. Under the basic conditions present during the process, metal sulphides will coagulate and any aluminium present will be in the form of the aluminate ion which, in the presence of $CaCl_2$, will form an insoluble calcium salt which will precipitate with the other insolubles. Soluble salts of titanium will also precipitate. Chromium in its trivalent oxidation state will precipitate as calcium chromite. Thus, the process of the present invention may be used to take out of solution a number of different classes of dissolved or suspended inorganic and organic materials, many of which, if left in the liquid phase, would interfere with subsequent activated sludge treatments.

In cases where it is required to treat waste waters containing significant amounts of detergent contaminants, it is preferred in accordance with the invention to add a soluble barium salt to the mixture being treated. Suitable barium salts include the halides, nitrates, hydroxide, carboxylic acid salts (benzoate, propionate, acetate, etc.) and sulphide. The barium salt is suitably added along with or prior to the addition of the carbonating agent. Sulphonic acids and sulphonates coagulate readily in the presence of stoichiometric or excess amounts of barium.

Some barium salts, for example barium chloride, are commercially available at low cost, so that their use is frequently to be preferred to other methods such as activated carbon absorption, oxidation by ozone and the like, for removing grease traces from mixtures prior to discharge.

Commonly, there may be one or more heavy metal ions present in the alkaline waste water. The process of the present invention may accordingly further include the step of adding a soluble sulphide, for example, sodium sulphide, ammonium sulphide, or potassium sulphide, just before or simultaneously with the carbonating step of the process. The sulphide reacts with the heavy metal ions present, to form substantially insoluble metal sulphides. For example, sulphide will react with hexavalent chromium, to form sulphur (which is a solid and hence will precipitate) and trivalent chromium, in the ratio of three moles of sulphide to two moles of chromium. The resulting calcium chromite salt is insoluble, and will precipitate. Suitable quantities of sulphide to be added are from about 1 to about 2 times the stoichiometric amount, based upon prior analysis to determine heavy metals amounts. Preferably the sulphide is added to the waste water in the form of an aqueous solution, with constant mixing in order to ensure a substantially complete reaction of the sulphide with the dissolved metal ions. The resultant precipitated heavy metal sulfides may be separated along with the calcium carbonate precipitate and the various organics brought out of solution therewith by means of filtration, sedimentation, etc. Moreover, the formation and precipitation of insoluble metal sulphides in calcium carbonate substantially decreases the risk that the heavy metals may redissolve and that lethal hydrogen sulphide gas may be generated, a risk which is encountered when strong acids or oxidants, commonly used in prior art processes, are present in the waste water.

The process of the present invention is also useful in treating waste solutions of moderate pH containing dissolved and suspended organics. In such case, initially the pH of the waste water may be raised by the additions of alkali, for example sodium carbonate, sodium hydroxide, potassium hydroxide, potassium carbonate and the like, so that the pH is raised to the pH 9 - 11 range. Calcium hydroxide may also be used for this purpose under certain conditions, but is less desirable because of its relative insolubility. If the alkali used for this purpose is $Na_2CO_3$, $K_2CO_3$ or the like, further carbonation requirements may be minimal or optional, since such compounds effectively raise the pH and carbonate the waste water in one step. Subsequently, in accordance with the process of the present invention, the pH-adjusted, alkaline waste water solution may be optionally treated with sulphides so as to effect the removal of heavy metals that may be present, followed by or simultaneously with carbonation to convert any hydroxides present to carbonates, and $CaCl_2$ addition to convert the carbonates therein to a calcium carbonate precipitate, that will carry a substantial quantity of the dissolved or suspended organics out of solution.

The process of the present invention can be further improved by the presence in the alkaline waste water, at the time of calcium carbonate (chalk) precipitation, of polyethylene glycol or polypropylene glycol in small amounts (up to about 1%, based upon the weight of the alkaline waste water). The presence of such glycols enhances the separation of the precipitate from the filtrate, by enhancing the formation of large particles which are easily filtered. Polyethylene glycol is particularly advantageous, since it enhances both the settlability and dewaterability of the formed precipitate or sludge. Polypropylene glycol has a similar but less marked effect. Experimental results have indicated that the amount of material coagulated is increased, and hence the concentration of organic material remaining in the liquid phase is decreased, by the presence of polyethylene glycol in the waste water at the time of chalk precipitation.

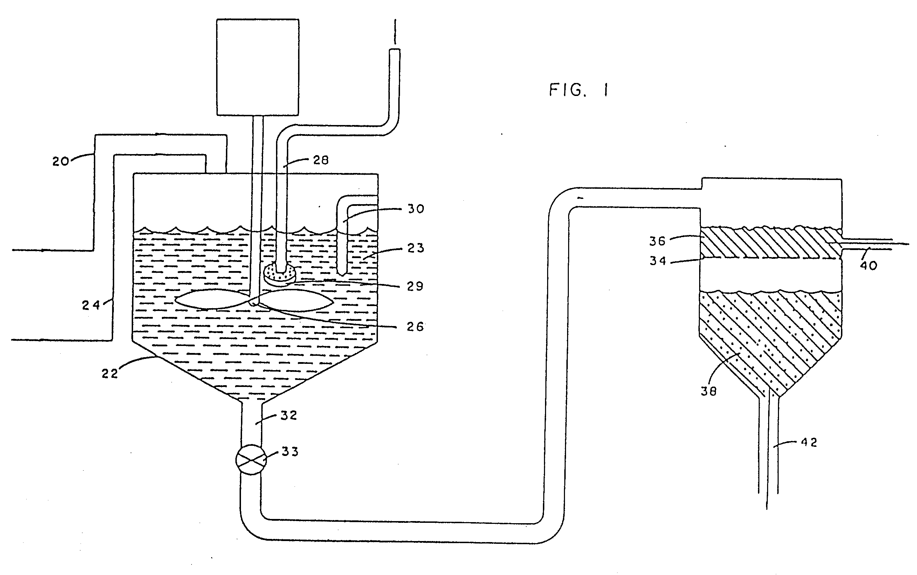

Referring the accompanying drawings and specifically Fig. 1, waste water is fed into a mixing vessel 22 through a wastes inlet line 20. Carbon dioxide gas from line 28 is bubbled into the wastes solution 23 via gas diffuser 29 in the mixing vessel 22 with constant stirring from the agitator 26.

The addition of $CO_2$ gas is maintained until the wastes solution 23 reaches an approximate pH of 10 as indicated by the pH electrode 30, at which point the $CO_2$ gas addition is stopped so as to avoid the formation of bicarbonates.

Next, the CaCl$_2$ solution is added to the carbonated waste water in the vessel 22 by means of a CaCl$_2$ inlet pipe 24. The CaCl$_2$ is added with constant stirring from the agitator 26 until a pH of approximately 7 is indicated by pH electrode 30.

The wastes solution 23 in the vessel 22 is then allowed to flow through outlet pipe 32 by opening gate valve 33, into a screening and filtering apparatus 34 where it is separated into precipitate 36 and liquid filtrate 38. The liquid filtrate 38 may then be transferred via transfer pipe 42 for further treatment or disposal and the precipitate 36 may be transferred via line 40 for disposal or put to various uses, for example, burning in a cement plant.

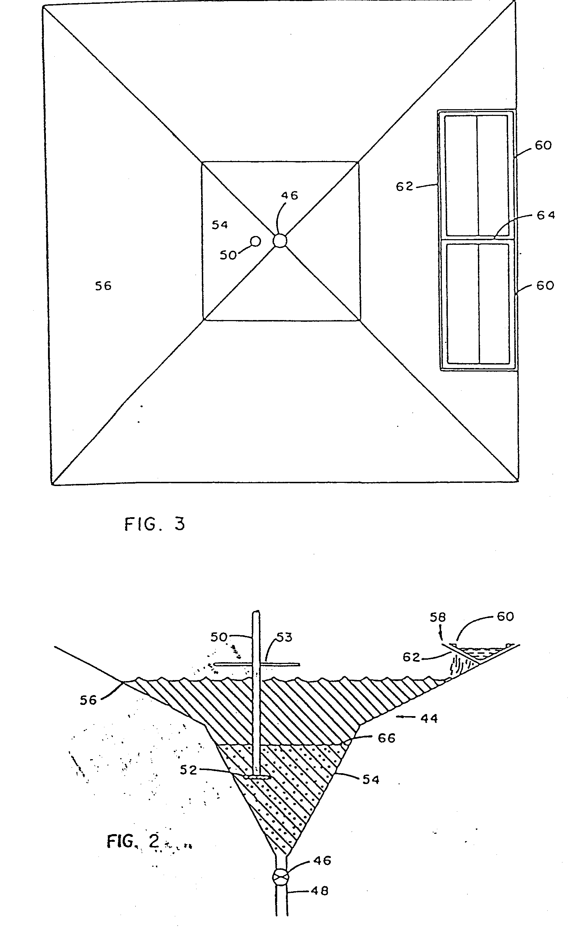

Referring now to Figure 2 and 3, there is diagrammatically illustrated a preferred embodiment of a device for carrying out the process of the present invention, especially suitable for small scale use where the operations are to be conducted as cheaply as possible, employing manual labour.

As seen in Figure 2, there is a mixing vessel of open topped, inverted pyramid-shape, as generally indicated by arrow 44. At the lower end of the mixing vessel 44 there is a discharge gate 46 and transfer pipe 48 for the removal of liquids and particulate solids from the lower end of mixing vessel 44. Located in the lower section of the mixing vessel 44 is a gas inlet pipe 50 terminating in a gas diffuser 52 which is used for the introduction of compressed gas into the vessel 44 e.g. compressed air to aid in mixing. A splash guard plate 53 surrounds the gas inlet pipe 50, at a level above the liquid fill level, to prevent upward liquid spattering from the tank caused by the gas bubbles.

The walls of the mixing vessel are into two sections 54 and 56 such that lower section 54 has a steeper gradient than upper section 56.

Along one upper wall at the top of the mixing vessel 44 there is a separating means, generally indicated by numeral 58. The separating means 58 includes a filter basket 60 which is removably placed in a receiving framework 62, so as to form a filter trough. The filter trough is divided transversely into two portions by divider 64 so as to accommodate a pair of similar filter baskets 60.

Referring now to Figure 3 there is seen the embodiment of Figure 2, as viewed from above. As seen, the filter trough has filter baskets 60 removably placed in framework 62. In use, caustic wastes are delivered manually or by other means into the mixing vessel 44. The wastes may then be treated with a carbonating agent such as $CO_2$ via compressed gas line 50 and diffuser 52.

Mixing of the wastes is effected by bubbling compressed gas for example air, through diffuser 52 at a rate to disturb sufficiently to mix the liquids. A suitable gas flow rate is from about 0.5 to 2.0 standard cubic feet of gas per minute for every 100 U.S. gallons of liquid being mixed. This involves a relatively low energy demand (about 5-20 watts) while the mixing is being carried out. This flow system in general has Newtonian characteristics, and does not depend on the use of air flotation and mechanical forces acting differentially on the heavier molecules in solution, which systems are much more energy intensive. The remaining reagents may then be manually added to the solution and thoroughly mixed by means of compressed gas through diffuser 52. The pH of the solution may be taken at the necessary intervals by manually placing a pH electrode into the solution.

After substantial time has passed so as to allow precipitation or settling of the solution, the sludge or sludge containing liquid portion has settled into lower section 54 to level 66. Discharge gate 46 is opened so as to allow remaining liquids and solids to pass therethrough, through the transfer pipe 48 to be collected. The sludge containing portion of the collected treated liquid may then be delivered into the filter trough where the liquids are allowed to pass through the filter baskets 60 back into the mixing vessel 44 and the precipitants are substantially all collected in the filter basket, for subsequent disposal e.g. by burning. This process may be repeated several times until substantially all of the solid precipitate is separated from the filtrate.

Apparatus according to this embodiment of the invention, wherein at least the lower parts of the walls of the vessel form an angle of at least 60° to the horizontal, avoids the problem often encountered in sludge separation vessels, namely that of "coning". When it is attempted to separate sludge from liquid in a shallow-sided or flat bottomed vessel, the withdrawal of sludge from a lowermost outlet first withdraws settled sludge from the vicinity of the outlet, but then leads to the withdrawal of clear liquids above the outlet before sludge situated remotely from the outlet has been withdrawn. To use such apparatus in the present invention would entail an excessive number of passes through and re-deliveries to the filter baskets 60. This is quite impractical when operating on the relatively small scale, in which delivery of material from transfer pipe 48 to filter basket 60 is to be made manually using pails. Whilst the "coning" problem might be overcome by using a vessel having its side walls inclined at 60° or more to the horizontal, this so increases the height to volume ratio of the apparatus that manual delivery of liquids to the filter basket again becomes impractical.

The present invention overcomes this practical difficulty by providing a vessel having a lower section in which the walls are inclined to the horizontal at an angle of greater than 60° and an upper section in which the walls are inclined to the horizontal at an angle of less than 60°, and preferably from 30°-45°. Inclinations less than about 30° unduly retard the settling rate as well as increasing the floorspace requirements. This overcomes the "coning" problems, without unduly increasing the overall height. The respective volumes of the lower section 54 and upper section 56 are suitably arranged relative to one another so that the sludge settles to a level 66 within lower section 54. Normally, the lower section 54 will contain from about 1/5 to about 1/3 of the total liquid in the

- 15 -

vessel.

The device as described herein above may be adapted or fitted with any number of instruments to automate the transfer of the wastes or treated wastes solution and the pH measurement of the solution. The provision of a square-section device is economical in terms of its use of floor space and construction materials. The provision of differently inclined side wall surfaces enables the overall height of the apparatus to be reduced to suitable size to permit ready transfer of liquids etc. from gate 22 to separating means 30, automatically or manually.

Other suitable equipment or apparatus may be used to carry out the process of this invention and it is not limited to that shown or described herein. However, the illustrated apparatus is particularly suitable for handling small batches of alkaline waste water, e.g. up to 150 gallons.

The process of the present invention may be utilized to remove large fractions of dissolved and suspended organic matter from aqueous solutions that are not readily separable by filtration or other methods. Moreover, the process yields a liquid that is much more amenable to further treatment, for example, a biological or chemical oxidation.

The carbonating agent and calcium chloride used in the process may be readily obtained as by-products of several industries and are available at a lower cost than mineral acids that are used in many conventional processes to control pH. Furthermore, the resulting precipitate, high in $CaCO_3$ may be

- 16 -

used advantageously in the manufacture of cement or may be used as landfill disposal due to its very low water content.

The invention is further described with reference to the following non-limiting examples:

EXAMPLE I

An aqueous emulsion/solution containing heavy metal ions, silica, zinc oxide, organic resins and other additives (derived from a commercially available latex paint composition) was alkalized and treated according to the process of the present invention, to separate out suspended and dissolved solids from liquid.

The liquid (2 liters total volume) had the following analysis:

| | |
|---|---|
| Liquid medium (predominantly water, but containing some glycols and other additives). | 1660.00 gm |
| Titanium dioxide | 273.30 gm |
| Silica | 125.90 gm |
| Zinc oxide | 29.70 gm |
| Organic polymer (acrylics & alkyd resins) | 125.90 gm |

This mixture was alkalized, to simulate an alkaline waste water for treatment, by addition thereto of 1.24 gm moles (131.96 gm) sodium carbonate (soda ash), forming an aqueous solution/emulsion of pH 10.5. No precipitation occurred, as was expected since no calcium salts were known to be present.

For the sake of comparison, the mixture was divided into two equal portions. To one portion was added 1.24 gm-moles of $CaCl_2$, twice the theoretical amount, as 183.04 gm of calcium chloride dihydrate in water solution. Precipitation began immediately, and settling was completed in fifteen minutes. As a further check on effectiveness, a wooden mixing spoon was dipped into each portion. From the alkaline portion it emerged with a thick coating, while the precipitated portion, which still was turbid and white in colour, left only some liquid droplets which ran and dribbled from the spoon.

The precipitate was collected in a Buchner funnel and dried overnight at $210^{\circ}F$, yielding a pliable solid of the consistency of bread dough. The filtrate had a strong odour of glycol and remained white in colour.

The precipitate of Example I was analyzed for its components as follows:

| | | |
|---|---|---|
| Mass of Dried Precipitate | 332.3 gm | |
| Mass of Chalk Formed from added materials | 62.1 gm | (which is 1/2 of 124.12) |
| Mass of Materials Removed from Solution | 270.2 gm | |

It is known from the composition of the mixture that each portion held 1/2 of 554.8 gm of solids, or 277.4 gm, so that the efficiency of removal was:

97.4% removal

The actual chalk content of the sludge that was required to obtain these results is:

18.7% chalk duty.

EXAMPLE 2

A mixture of oils, detergent and used grinding fluid from a machine shop, which had a strong odour resembling kerosene and which was found to have 8000 parts per million of extractable matter was treated by the process of this invention.

To 50 ml of sample was added 2 ml of 5.0 M NaOH, which raised the pH from 9.0 to 12.5. Carbonate was formed in situ by the addition of 50 ml of 0.20 Molar sodium bicarbonate. Chalk formation occurred after addition of 10 ml of 1.0 Molar calcium chloride solution with five minutes stirring. Ten minutes settling left a chalk layer which occupied the bottom two-fifths of the vessel and changed the liquid from a white turbid appearance to a transparent, faintly yellow colour.

The mixture was filtered through a Buchner funnel and the precipitate weighed wet, to 2.7804 gm, then dried overnight at $220^{\circ}F$ to 1.2280 gm dry solids. The dried sludge had a tan appearance and retained a kerosene-like odour.

The precipitate and filtrate were analyzed for their components and the results were as follows:

The aqueous phase was tested by the "Freon extraction method"* and found to have 318 parts per million of extractable matter.

* This method is fully described in "Standard Methods for the Examination of Water and Waste Water, Fourteenth Edition," APHA-AWWA-WPCF, Washington, D.C. 1975, pages 515 and 516, Method no. 502 A.

- 19 -

0.010 gm-moles or 1.001 gm of chalk were formed in solution:

so that the amount of moisture, solids and oils recovered by filtration (wet weight less chalk formed) is 1.78 gm, and the dry weight is 0.337 gm. On drying the precipitate, some volatile organic matter is probably lost by evaporation as indicated by odours given off during drying and leading to some minor apparent inconsistencies in the results.

95% of the dissolved and suspended components were removed from the solution by the process.

EXAMPLE 3

Alkaline cleaning wastes and rinse water from a tank truck wash was obtained and found to have a pH of 11.8, and Freon-extractables of 3.166 gm/liter, including some polymeric solids. To a 3.8 liter sample was added sufficient carbon dioxide gas, drawn from a cylinder, to reduce the sample pH to 10.1. At this point, the mixture remained grey and very turbid in appearance. To the mixture was added 50 ml of dry calcium chloride in the form of fine powder with stirring. Large granules appeared, and after stirring five minutes, the mixture was allowed to settle. A yellow, translucent liquid remained in the upper four-fifths of the vessel while a grey sludge settled to the bottom. The phases were separated with a Buchner funnel.

The wet sludge had a mass of 192.5 gm, and upon drying overnight at 210°F left a hard and brittle solid similar in appearance to concrete, with a mass of 34.1 gm.

The precipitate and filtrate of Example 5 were analyzed as follows:

Chalk formation was determined by dissolving a sample of the dry sludge and capturing the evolved gas after acidification. At 26°C there was produced 238.5 ml of carbon dioxide from 5.1758 gm dry sludge , corresponding to 0.188 gm chalk per gm dry sludge, or a chalk duty of 18.8%.

Back calculation shows that there were 27.7 gm of materials removed from 3.8 liters of liquid, for a concentration of 7.3 gm/liter. 98% of the dissolved or suspended components were removed from the solution. 148 parts per million of extractable organic matter remained in the solution.

EXAMPLE 4

Waste water samples were obtained from a machine shop, the first a wash solution containing detergent and grease, the second a used grinding fluid of the "synthetic" variety, i.e. formulated with a polyglycol of unknown type. On analysis, both samples were found to contain significant quantities of copper and aluminium. The first, wash solution contained 14.0 ppm copper and 34.0 ppm aluminium, along with 6530 ppm of extractable oil and grease. The second, grinding fluid contained 0.25 ppm copper and 15.0 ppm aluminium, along with 11,584 ppm of extractable oil.

To a 200 ml sample of the first, oily wash solution was added 2.12 gm soda ash dissolved in 10 ml water. Sodium sulphide, 2 ml of a 7.32 gm/liter solution, was added and the mixture stirred. Calcium chloride (20 ml of a 1.0 M solution) was added, whereupon a sludge formed, composed of visible granules. However, the sludge did not settle, after standing for 1 hour.

Then, to a 50 ml portion of the above liquid containing unsettled sludge, there was added 25 ml of the second, grinding fluid. Coagulation of the mixture was effected by adding 0.5 gm soda ash in 5 ml water solution, under stirring, followed by 5 ml of 1.0 M calcium chloride solution. After 15 minutes, the sludge had settled to produce a clear, greenish liquid and a settled sludge which occupied the bottom 50% of the vessel.

The sludge was removed by filtration through Whatman No. 41 filter paper, and the liquid phase analysed. It was found to contain 55 ppm extractable oils, 1.8 ppm copper and 1.7 ppm aluminium. Clearly, a marked reduction in metals content has been achieved. In final analysis, 48 ppm sodium sulphide has been added to the final product. Greater amounts of sulphide addition will lead to even lower final metal contents.

EXAMPLE 5

This example illustrates the use of glycol additions, to enhance the nature of the chalk precipitate.

3.2 gm of 99.4% commercial sodium stearate was dissolved in 100 ml hot water, after which 2.18 gm of waste oil was added, with stirring, to form a brown and turbid emulsion. To the emulsion was added 0.05 gm mole of sodium carbonate as 5.30 gm of anhydrous soda ash, dissolved in 100 ml of water and the mixture was diluted to 500 ml. The dilute solution remained homogeneous and brown.

The mixture was divided equally into five 100 ml portions. To the first portion, labelled 25 E, was added 250 mg of a polyethylene glycol of average molecular weight 4500 Daltons (Dow polyglycol E 4500), which was a solid and had to be dissolved in 95% ethanol to a 10 ml solution before additon. This solution then contained polyglycol at a concentration of 0.25%.

To the second portion was added 100 mg of polyglycol E 4500 in 10 ml ethanol, giving a concentration of 0.10% (labelled 10 E).

To a third portion was added 250 mg of a polypropylene glycol of average molecular weight 4000 Daltons (Dow polyglycol P 4000) a viscous oil which was dissolved in 10 ml ethanol before addition (labelled 25 P) and containing 0.25% glycol.

To the fourth portion "10 P" was added 100 mg of polyglycol P 4000, to give a concentration of polypropylene glycol of 0.10%. The fifth portion was used as blank control, and was not treated with polyglycol.

Sample 25E and 10E became less turbid upon addition of polyglycol, while samples 25P and 10P became more turbid. To each sample was added, under stirring, 0.1 gm--mole calcium chloride as 10.2 ml of a 1.0 M solution. The samples were stirred for five minuutes.

Sample 25E settled into the bottom 20% of flask volume after three minutes and settled while the stirring was still being performed. Sample 10E did likewise, but after four minutes. In both cases, the particle size was large and the supernatant liquid clear and colourless.

- 23 -

Samples 25P and 10P required five minutes settling time after stirring was stopped, in order to separate. These samples only settled into the bottom 50% of flask volume. The blank would not settle at all.

Dewaterability was estimated by comparing wet weights of each sludge sample after filtering, since all samples are identical except for their glycol content. All samples were filtered through tissue paper to give a clear or slightly turbid, colourless phase after filtering. The wet weight of precipitate from sample 25E was 6.545 gm. That from 10E was 7.505 gm, that from 25P was 11.6 gm, and that from 10P 8.98gm.

It is seen that the presence of polyethylene or polypropylene glycols during chalk coagulations enhances the formation of large particles which are easily filtered. In addition, polyethylene glycol enhances both the settlability and dewaterability of a sludge, an effect which is seen less markedly with polypropylene glycol.

EXAMPLE 6

This example demonstrates the use of a barium salt as an additive to an aqueous mixture, for removal of detergents (surfactants) therefrom.

The aqueous mixture to be treated was prepared by combining 18.3 ml of a 60,245 ppm solution of sodium dodecyl sulphate (sodium lauryl sulphate, detergent), with 3.00 gm of waste oil and 4.345 gm soda ash (anhydrous sodium carbonate), and diluting this mixture with 500 ml distilled water, to give a mixture containing 2205 ppm detergent and 6000 ppm oil. To this was added 10 ml of an ethanol solution containing 0,185 gm of Dow Polyglycol E 4500, a polyethylene glycol of molecular weight 4500, so as to provide a solution 370 ppm in polyglycol.

To this solution was added, with stirring, 2.0 gm barium chloride dissolved in 20 ml water. The turbidity of the solution increased. Calcium chloride was then added as 10 ml of a 1.0 M solution, resulting in the formation of a sludge which was fibrous in nature and settled into the bottom 5% of the container after two minutes of settling. Sludge removal was accomplished by filtering through tissue paper. A clear and colorless liquid was obtained, which tended to form bubbles when shaken, indicating the presence of some detergent.

The filtrate was acidified with sulphuric acid and extracted with Freon for recovery of any residual oil that had remained in solution, and the Freon extract evaporated. It was determined from the extraction that 26 ppm of extractable matter remained in the liquid.

CLAIMS

1. A process for treating alkaline waste water containing dissolved or suspended organic or inorganic material, which comprises carbonating said waste water to form carbonates theein and to reduce the pH thereof to pH 11 or lower, subsequently adding calcium chloride to the carbonated waste water to convert the carbonates therein to a calcium carbonate precipitate, and separating said precipitate from the resulting filtrate.

2. A process according to claim 1, wherein the waste water is carbonated with an agent selected from sodium bicarbonate, potassium bicarbonate, ammonium bicarbonate, carbon dioxide and gas mixtures containing carbon dioxide, the pH value of the carbonated waste water being above the pH value at which bicarbonates are present.

3. A process according to claim 1, wherein said waste water is carbonated by adding carbon dioxide to said waste water in an amount such that the pH value of the carbonated waste water is above the pH value at which bicarbonates are present.

4. A process according to claim 1, 2 or 3, wherein prior to or simultaneously with carbonating said waste water, there is added a sulphide selected from sodium sulphide, potassium sulphide and ammonium sulphide, to cause precipitation of heavy metals.

5. A process according to any one of the preceding claims, wherein said calcium chloride is in the form of an aqueous solution having a concentration of 25-35%.

6. A process according to any one of the preceding claims, wherein said carbonated waste water has a pH between pH 9 and pH 11.

7.    A process according to any one of the preceding claims wherein a soluble barium salt is additionally added, prior to or along with the addition of carbonating agent, to assist in removal of detergent contaminants from the waste water.

8.    A process according to any one of the preceding claims wherein the alkaline waste water, at the time of calcium carbonate precipitation also has present therein small amounts of polyethylene glycol or polypropylene glycol.

9.    A process for treating alkaline waste water containing dissolved and suspended organic material, which process comprises adding $CO_2$ to said waste water in an amount so as to cause conversion of hydroxides therein to a carbonate form whereupon said carbonated waste water has a pH of 11 or less, subsequently adding to the carbonated waste water a quantity of $CaCl_2$ in the form of a 30% aqueous solution thereby converting carbonates in the waste water to a calcium carbonate precipitate, and separating said precipitate from the filtrate.

10.    A device for separating liquids from precipitated solids comprising a vessel (44) of generally inverted pyramidal shape, the downwardly converging side walls (54,56) thereof having upper portion (56) of gradient less than $60^{\circ}$ to the horizontal and lower portion (54) of gradient at least $60^{\circ}$ to the horizontal;

a separating device (58) adjacent the upper end of the vessel (44), said separating device comprising a filter (60) for separating at least some of the precipitated solids from the liquid;

and a lower valved outlet (46) for removal of bottom-collecting materials from the mixture.

11.   A device according to claim 10 wherein the upper portion (56) of the side walls has an inclination to the horizontal of from $30^{\circ}$ to $45^{\circ}$.

FIG. 1

FIG. 3

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-1 802 806 (H.A. CURTIS et al.) * Page 1, lines 1-16 * | 1-3,6,9 | C 02 F 1/52 |
| A | DE-A-2 628 649 (CHEM. INSTITUT SCHÄFER) * Page 4, paragraph 3 - paragraph 5 * | 4 | |
| A | DE-C- 9 276 (K. UND TH. MÖLLER) * Page 2 * | 7 | |
| A | US-A-4 018 679 (F. BÖLSING) * Column 3, line 6 - column 4, line 7; column 7, example 6 * | 8 | |
| Y | FR-A-2 420 363 (SOAF) * Page 5, claims 1,2; figure * | 10,11 | TECHNICAL FIELDS SEARCHED (Int. Cl. 3) C 02 F |
| Y | FR-A-1 289 079 (BETEILIGUNGS UND PATENTVERWALTUNGSGESELLSCHAFT) * Page 2, right-hand column, paragraph 3 - page 3, left-hand column, paragraph 1 * | 10,11 | |
| Y | GB-A- 588 694 (J.A. PICHARD et al.) * Page 2, line 91 - page 3, line 8 * | 10,11 | |

The present search report has been drawn up for all claims

| Place of search | Date of completion of the search | Examiner |
|---|---|---|
| THE HAGUE | 09-05-1984 | TEPLY J. |